# EUROPÄISCHE PATENTSCHRIFT

(11) **EP 2 930 051 B1**
(45) Veröffentlichungstag und Bekanntmachung des Hinweises auf die Patenterteilung: **01.01.2020**
(21) Anmeldenummer: 14163898.1
(22) Anmeldetag: 08.04.2014
(51) Int. Cl.: B60K 37/06, G06F 3/0488

(54) **Vorrichtung und Verfahren zum Bereitstellen einer graphischen Benutzerschnittstelle in einem Fahrzeug**
Method and device for providing a graphical user interface in a vehicle
Dispositif et procédé de préparation d'une interface utilisateur graphique dans un véhicule

(43) Veröffentlichungstag der Anmeldung: 14.10.2015
(73) Patentinhaber: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE)

(56) Entgegenhaltungen:
- DE-A1-102011 116 120
- US-A1- 2012 176 382

## Beschreibung

Die vorliegende Erfindung betrifft eine Vorrichtung und ein Verfahren zum Bereitstellen einer graphischen Benutzerschnittstelle in einem Fahrzeug.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge häufig Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Weiterhin verfügen Anzeigevorrichtungen häufig über konfigurierbare Hauptanzeigen, welche angezeigt werden, wenn die Anzeigevorrichtung gestartet wird. Die Hauptanzeige, welche auch als Home-Screen bezeichnet wird, kann dabei insbesondere vom Nutzer persönlich konfiguriert werden.

Die US 8,407,576 B1 beschreibt ein Verfahren zum Zusammenstellen einer situationsbedingten web-basierten Benutzeroberfläche aus einer Vielfalt von Web-Seiten. Dabei kann ein Layout der Benutzeroberfläche von einem Nutzer konfiguriert werden.

Die US 2010/0255882 A1 beschreibt eine Vorrichtung mit einem Anzeigemodul, auf dem eine Vielzahl von Elementen angezeigt werden kann. Die Vielzahl von Elementen kann dabei in unterschiedlichen Anordnungen auf dem Anzeigemodul angezeigt werden.

Nachteilig an den Verfahren des vorbekannten Standes der Technik ist, dass sie die ungeteilte Aufmerksamkeit des Nutzers benötigen und somit ungeeignet zur Verwendung in einem Fahrzeug

Das Dokument US 2012/176382 A1 offenbart den Oberbegriff des Anspruchs 1.

Es ist Aufgabe der vorliegenden Erfindung, eine Vorrichtung und ein Verfahren bereitzustellen, mit denen auf intuitive und schnelle Art und Weise im Fahrzeug Anordnungen von graphischen Objekten verändert werden können.

Diese Aufgabe wird durch eine Vorrichtung nach Anspruch 1 und ein Verfahren nach Anspruch 8 gelöst. Vorteilhafte Ausgestaltungen und Weiterbildungen sind Gegenstände der abhängigen Ansprüche.

Die erfindungsgemäße Vorrichtung umfasst eine zweite Bedienaktion eine Wischgeste, wobei die Richtung der Wischgeste erfassbar ist. Mit der Wischgeste ist in Abhängigkeit von der Richtung der Wischgeste ein Bildlauf auf der Anzeigefläche erzeugbar, mittels welchem die weiteren graphischen Objekte der zweiten Hauptanzeige zur Anzeige bringbar sind, wobei gleichzeitig die Markierung in dem Fenster entsprechend der Positionen der graphischen Objekte und der weiteren graphischen Objekte auf der Anzeigefläche auf den schematischen Darstellungen der Hauptanzeigen verschiebbar ist.

Die Möglichkeiten zur Anordnung stellen insbesondere Layouts für die Anzeige von graphischen Objekten auf einer Anzeigefläche dar. Vorteilhaft an der erfindungsgemäßen Vorrichtung ist insbesondere, dass dem Nutzer Layouts der graphischen Objekte auf der Anzeigefläche angeboten werden. Dadurch kann der Nutzer, insbesondere der Fahrer eines Fahrzeugs, auf einfache und schnelle Art und Weise das Layout der Anzeigefläche ändern, ohne die Aufmerksamkeit vom Straßenverkehr abwenden zu müssen. Die Erfassungseinheit kann dabei als berührungsempfindliche Oberfläche, welche auf der Anzeigefläche angeordnet ist, ausgebildet sein. Die Anzeigevorrichtung stellt also einen sogenannten Touch-Screen bereit.

In einer Ausgestaltung weist die Vorrichtung eine Konfiguriereinheit auf, mittels welcher die Möglichkeiten für die Anordnung der graphischen Objekte konfigurierbar sind. Dies ermöglicht es dem Nutzer, dass er sich die Layouts nach seinen Vorlieben zusammenstellt und nicht bereits vorgefertigte Templates zur Anordnung verwenden muss. Die selbst konfigurierten Layouts kann er dann in der Speichereinheit abspeichern und jederzeit auf die von ihm erstellten Layouts zugreifen.

In einer weiteren Ausgestaltung der Vorrichtung sind die Möglichkeiten für die Anordnung der graphischen Objekte über Felder, welche die Anzeigefläche repräsentieren und welche Platzhalter aufweisen, welche die graphischen Objekte repräsentieren, anzeigbar. Es werden dem Nutzer dabei insbesondere mehrere Felder auf einmal angezeigt, so dass er sich schnell ein Bild darüber machen kann, welche Layouts überhaupt vorhanden sind. Dabei können die Platzhalter leer, also ohne Inhalt, angezeigt werden. Dies ermöglicht es dem Nutzer, eine möglichst unvoreingenommene Sicht auf die möglichen Layouts der Anzeigefläche zu erhalten.

Die möglichen Layouts basieren dabei insbesondere auf sogenannten Basisrastern. Dabei stellt ein Basisraster die der Anordnung der graphischen Objekte zugrunde liegende Unterteilung der Anzeigefläche dar. Das Basisraster kann dabei die minimale Größe eines graphischen Objekts einschränken. Das Basisraster bestimmt insbesondere durch Kombinatorik die Anzahl verschiedener möglicher Objektgrößen. Je feiner dabei die Untergliederung des Basisrasters ist, desto höher wird die Anzahl möglicher Anordnungen der graphischen Objekte auf der Anzeigefläche.

Insbesondere sind den Platzhaltern Anzeigeinhalte der graphischen Objekte zuordenbar, so dass in jedem Feld eine Vorschau darauf erzeugbar ist, welche Anzeige auf der Anzeigefläche anzeigbar ist, wenn eines der Felder ausgewählt werden würde.
Der Fahrer kann also bereits, bevor er sich tatsächlich für ein Layout entscheidet, sehen, wie das Layout mit Anzeigeinhalten auf der Anzeigefläche angezeigt werden würde.

Insbesondere sind die graphischen Objekte in Ausgangsgrößen mit einem Anzeigeinhalt anzeigbar. Weiterhin umfassen die Möglichkeiten für die Anordnung der graphischen Objekte Platzhalter in verschiedenen Größen, wobei ein graphisches Objekt einem Platzhalter mit geringerer oder größerer Größe zuordenbar ist, wobei der Anzeigeinhalt des graphischen Objekts verkleinerbar bzw. vergrößerbar ist. Dies bedeutet, dass auch ein Layout ausgewählt werden kann, welches kleinere oder größere Platzhalter aufweist. Der Anzeigeinhalt der graphischen Objekte kann dabei an unterschiedliche Größen angepasst werden.

In einer weiteren Ausgestaltung umfasst die Vorrichtung Fahrzeugfunktionen des Fahrzeugs. Die graphischen Objekte können dann Widget-Objekte umfassen, welche den Fahrzeugfunktionen zugeordnet sind und welche Informationen zu den Einstellungen der Fahrzeugfunktionen umfassen.

Unter einem *Widget-Objekt* wird im Sinne der Erfindung ein Objekt verstanden, welches graphisch auf der Anzeigefläche dargestellt wird und welches einer Anwendung zugeordnet ist, die z. B. von einer Fahrzeugeinrichtung ausgeführt wird. Ein Widget-Objekt kann insbesondere in einem kleinen Bereich der Anzeigefläche Informationen einer Fahrzeugeinrichtung anzeigen, die laufend aktualisiert werden. Beispielsweise können von dem Widget-Objekt Routeninformationen des Navigationssystems, aktuelle Meldungen zum Wetter, zum Straßenzustand und zum Verkehrszustand angezeigt werden sowie Informationen zu Multimedia-Einrichtungen des Fahrzeugs. Die Widget-Objekte werden insbesondere unabhängig vom weiteren Anzeigeinhalt der Anzeigefläche dargestellt. Ist das Anzeigefenster ein Widget-Objekt, können auch die graphischen Objekte in dem Anzeigefenster Widget-Objekte sein. Dabei hat der Nutzer über das Anzeigefenster Zugang zu anderen Widget-Objekten.

Die vorbestimmte Anordnung der graphischen Objekte stellt beispielsweise eine erste Hauptanzeige der Anzeigevorrichtung bereit, wobei die Hauptanzeige in Abhängigkeit von einem Betriebsmodus der Anzeigevorrichtung anzeigbar ist. Die erste Hauptanzeige wird insbesondere dann angezeigt, wenn die Anzeigevorrichtung gerade gestartet wurde. Die erste Hauptanzeige wird insbesondere auch als Home-Screen bezeichnet. Der Home-Screen wird weiterhin insbesondere dann angezeigt, wenn der Nutzer eine Schaltfläche betätigt hat, mit der er zum Home-Screen zurückkehren kann.

In einer weiteren Ausgestaltung ist in der Speichereinheit zumindest eine zweite Hauptanzeige mit weiteren graphischen Objekten speicherbar. Weiterhin umfasst die Erfassungseinheit eine Annäherungserfassungseinheit, mittels welcher eine Bedienabsicht erfassbar ist. Wenn die Annäherungserfassungseinheit eine Bedienabsicht erfasst hat, ist die Anzeigefläche mittels der Steuereinheit derart ansteuerbar, dass sie von einem Anzeigemodus in einen Bedienmodus wechselt, wobei in dem Bedienmodus die weiteren graphischen Objekte zumindest teilweise anzeigbar sind. Dadurch kann dem Nutzer angezeigt werden, dass er überhaupt die Möglichkeit hat, auch einen anderen Home-Screen als den ersten Home-Screen auszuwählen.

Weiterhin können die graphischen Objekte Themengebieten zuordenbar sein, wobei in einer Hauptanzeige graphische Objekte eines Themengebiets zusammenfassbar sind. In Abhängigkeit von der Erfassung der ersten Bedienaktion ist dann ein Fenster auf der Anzeigefläche anzeigbar, in welchem die zumindest zwei Hauptanzeigen schematisch darstellbar sind, wobei die schematische Darstellung der ersten Hauptanzeige durch eine Markierung hervorgehoben darstellbar ist. Dadurch bekommt der Nutzer vorteilhafterweise einen Überblick über von ihm konfigurierte Home-Screens. Weiterhin wird dem Nutzer angezeigt, welcher der konfigurierten Home-Screens ihm gerade angezeigt wird.

Die Erfassungseinheit ist also zunächst derart ausgestaltet, dass sie Wischgesten sowie die Richtungen, in die Wischgesten ausgeführt werden, erkennen kann. Weiterhin kann die Steuereinheit die Anzeigefläche dann derart ansteuern, dass ein Bildlauf erzeugt wird. Unter einem Bildlauf wird insbesondere verstanden, dass graphische Objekte auf der Anzeigefläche auf einer Seite zur Anzeige gebracht werden, also in die Anzeigefläche hineingeschoben werden, während auf der anderen Seite der Anzeigefläche graphische Objekte aus der Anzeigefläche hinausgeschoben werden. Dadurch, dass die Markierung in gleicher Weise auf den schematischen Darstellungen der Hauptanzeigen verschoben werden kann, wird dem Nutzer immer angezeigt, welche momentan auf der Anzeigefläche angezeigten graphischen Objekte zu welchem Home-Screen gehören. Insbesondere ist die Markierung in die entgegengesetzte Richtung zu der erfassten Richtung verschiebbar, während der Bildlauf in Richtung der erfassten Richtung erzeugbar ist.

Weiterhin kann die zweite Bedienaktion eine Wischgeste umfassen, wobei wiederum die Richtung der Wischgeste erfassbar ist. Dabei ist die Wischgeste für das Fenster erfassbar, wobei die Markierung in Abhängigkeit von der Richtung der Wischgeste auf den schematischen Darstellungen der Hauptanzeigen verschiebbar ist. Gleichzeitig ist auf der Anzeigefläche in Abhängigkeit von der Richtung der Wischgeste ein Bildlauf erzeugbar, mittels welchem die weiteren graphischen Objekte der zweiten Hauptanzeige zur Anzeige bringbar sind. In dieser Ausgestaltung ist also der Bildlauf nicht durch die Wischgeste erzeugbar, sondern vielmehr dadurch, dass die Markierung verschoben wird. Dabei kann der Bildlauf dann in entgegengesetzter Richtung zu der erfassten Richtung erzeugbar sein, während die Markierung in die erfasste Richtung verschiebbar ist.

Mit der erfindungsgemäßen Vorrichtung kann eine Wischgeste in zwei entgegengesetzte Richtungen ausgeführt werden und trotzdem kann die gleiche Anzeige auf der Anzeigefläche erzeugt werden. Dies ist insbesondere dann vorteilhaft, wenn der Nutzer nicht viel Aufmerksamkeit darauf legen kann, wo genau er die Wischgeste ausführt, wie es bei dem Führen eines Fahrzeugs der Fall ist.

Ferner betrifft die Erfindung ein Verfahren zum Bereitstellen einer Benutzerschnittstelle in einem Fahrzeug. Bei dem erfindungsgemäßen Verfahren werden graphische Objekte in einer vorbestimmten Anordnung auf einer Anzeigefläche angezeigt. Es wird eine erste Bedienaktion erfasst. Wenn die erste Bedienaktion erfasst wurde, wird eine Anzahl von Möglichkeiten für die Anordnung der graphischen Objekte auf der Anzeigefläche angezeigt. Es wird eine zweite Bedienaktion erfasst, mit der eine der Möglichkeiten für die Anordnung ausgewählt wird. Wenn die zweite Bedienaktion erfasst wurde, werden die graphischen Objekte in der ausgewählten Anordnung angezeigt. Das erfindungsgemäße Verfahren ist dazu geeignet, von der erfindungsgemäßen Vorrichtung ausgeführt zu werden und weist daher alle Vorteile der Vorrichtung auf.

In einer weiteren Ausgestaltung des Verfahrens wird die vorbestimmte Anordnung der graphischen Objekte einer ersten Hauptanzeige der Anzeigevorrichtung zugeordnet, die auf der Anzeigefläche angezeigt wird, wobei auf der Anzeigefläche zumindest eine zweite Hauptanzeige mit weiteren graphischen Objekten anzeigbar ist. Wenn die erste Bedienaktion erfasst wurde, wird ein Fenster angezeigt, in welchem die zwei Hauptanzeigen schematisch dargestellt werden, wobei die schematische Darstellung der ersten Hauptanzeige durch eine Markierung hervorgehoben dargestellt wird. Die zweite Bedienaktion umfasst eine Wischgeste, wobei die Richtung der Wischgeste erfasst wird. Mit der Wischgeste wird in Abhängigkeit von der Richtung der Wischgeste ein Bildlauf auf der Anzeigefläche erzeugt, mittels welchem die weiteren graphischen Objekte der zweiten Hauptanzeige zur Anzeige gebracht werden, wobei gleichzeitig die Markierung in dem Fenster entsprechend der Position der graphischen Objekte und der weiteren graphischen Objekte auf den schematischen Darstellungen der Hauptanzeigen verschoben wird.

Weiterhin kann die vorbestimmte Anordnung der graphischen Objekte einer ersten Hauptanzeige der Anzeigefläche zugeordnet werden, die auf der Anzeigefläche angezeigt wird, wobei auf der Anzeigefläche zumindest eine zweite Hauptanzeige mit weiteren graphischen Objekten anzeigbar ist. Wenn die erste Bedienaktion erfasst wurde, wird ein Fenster angezeigt, in welchem die zwei Hauptanzeigen schematisch dargestellt werden, wobei die schematische Darstellung der ersten Hauptanzeige durch eine Markierung hervorgehoben dargestellt wird. Ebenso kann die zweite Bedienaktion eine Wischgeste umfassen, wobei die Richtung der Wischgeste erfasst wird. Es wird dann erfasst, ob die Wischgeste dem Fenster zuordenbar ist. Wenn erfasst wurde, dass die Wischgeste dem Fenster zuordenbar ist, wird die Markierung in Abhängigkeit von der Richtung der Wischgeste auf den schematischen Darstellungen der Hauptanzeigen verschoben. Gleichzeitig wird auf der Anzeigefläche in Abhängigkeit der Richtung der Wischgeste ein Bildlauf erzeugt, mittels welchem die weiteren graphischen Objekte der zweiten Hauptanzeige zur Anzeige gebracht werden.

Das Verfahren kann also insbesondere unterscheiden, ob die Wischgeste dem Fenster mit den schematischen Darstellungen oder den graphischen Objekten gilt.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt ein Fahrzeug mit dem Ausführungsbeispiel der erfindungsgemäßen Vorrichtung,
- Figur 3: zeigt Beispiele für Basisraster für die Anordnung graphischer Objekte auf der Anzeigefläche,
- Figur 4a: zeigt eine Hauptanzeige auf der Anzeigefläche in einem Anzeigemodus,
- Figur 4b: zeigt die Hauptanzeige auf der Anzeigefläche in einem Bedienmodus,
- Figuren 5a bis 5d: zeigt Beispiele für Anzeigen auf der Anzeigefläche für die Auswahl einer Möglichkeit für die Anordnung graphischer Objekte,
- Figuren 6a bis 6d: zeigen Beispiele für asymmetrische Basisraster und
- Figuren 7a und 7d: zeigen weitere Anzeigen auf der Anzeigefläche während eines Ausführungsbeispiels des erfindungsgemäßen Verfahrens.

Die in den Figuren enthaltenen englischsprachigen Wörter stellen in dieser Anmeldung graphische Symbole und Eigennamen dar.

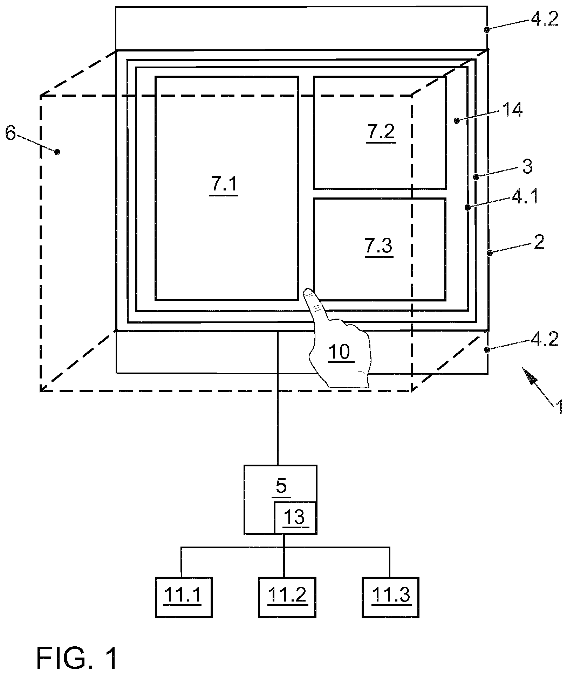

Mit Bezug zu Figur 1 wird ein Ausführungsbeispiel einer erfindungsgemäßen Vorrichtung 1 erläutert.

Die erfindungsgemäße Vorrichtung 1 umfasst eine Anzeigevorrichtung 2 mit einer Anzeigefläche 3. Auf der Anzeigefläche 3 sind mehrere graphische Objekte 7.1 bis 7.3 anzeigbar. Dabei sind die graphischen Objekte 7.1 bis 7.3 insbesondere Widget-Objekte. Die Widget-Objekte 7.1 bis 7.3 unterstützen den Nutzer bei der Steuerung von Einrichtungen der Vorrichtung 1. Weiterhin werden die Widget-Objekte 7.1 bis 7.3 in einer vorbestimmten Anordnung auf der Anzeigefläche 3 angezeigt. Die vorbestimmte Anordnung wurde dabei beispielsweise vom Nutzer bestimmt. Die Anzeige auf der Anzeigefläche 3 wird immer dann angezeigt, wenn die Vorrichtung 1 gestartet wird. Es handelt sich daher bei der Anzeige mit den Widget-Objekten 7.1 bis 7.3 in der vorbestimmten Anordnung um eine erste Hauptanzeige, die auch als Home-Screen bezeichnet wird.

Die Vorrichtung 1 umfasst ferner eine Erfassungseinheit, die eine berührungsempfindliche Oberfläche 4.1 und eine Annäherungserfassungseinheit 4.2 umfasst. Mit der Annäherungserfassungseinheit 4.2 kann eine Annäherung eines Betätigungselements 10, beispielsweise der Hand des Nutzers an die berührungsempfindliche Oberfläche 4.1 erfasst werden kann. Dazu ist ein Erfassungsraum 6 vor der Anzeigefläche 3 ausgebildet. Durch eine Annäherung eines Betätigungselements 10 an die Anzeigefläche, insbesondere dann, wenn das Betätigungselement 10 in den Erfassungsraum 6 eindringt, wird eine Bedienabsicht des Nutzers erfasst.

Weiterhin umfasst die Vorrichtung 1 eine Steuereinheit 5. Dabei ist die Steuereinheit 5 mit der berührungsempfindlichen Oberfläche 4.1, der Annäherungserfassungseinheit 4.2 und der Anzeigefläche 3 gekoppelt. Dadurch kann die Anzeigefläche 3 in Abhängigkeit von mit der berührungsempfindlichen Oberfläche 4.1 und der Annäherungserfassungseinheit 4.2 erfassten Bedienaktionen bzw. Bedienabsichten angesteuert werden.

Dabei ist die Anzeigevorrichtung 2 weiterhin derart ausgestaltet, dass die Anzeigefläche 3, wenn eine Bedienabsicht erfasst worden ist, von einem Anzeigemodus in einen Bedienmodus wechselt. Dabei ist insbesondere erfassbar, ob sich die Bedienabsicht auf die Anzeigefläche 3 im Allgemeinen, oder auf ein bestimmtes graphisches Objekt 7.1 bis 7.3, welches auf der Anzeigefläche 3 angezeigt wird, bezieht.

In die Steuereinheit 5 ist eine Speichereinheit 13 integriert, in welcher Möglichkeiten für die Anordnung der graphischen Objekte 7.1 bis 7.3 abgespeichert sind. Die Möglichkeiten für die Anordnung der graphischen Objekte 7.1 bis 7.3 und möglicher weiterer graphischer Objekte kann dabei über eine Konfiguriereinheit 14 vom Nutzer konfiguriert werden. Dabei kann beispielsweise die berührungsempfindliche Oberfläche 4.1 gleichzeitig die Konfiguriereinheit 14 darstellen, wobei die Möglichkeiten für die Anordnung beispielsweise über Bedienaktionen auf der berührungsempfindlichen Oberfläche 4.1 konfiguriert werden können. Die Möglichkeiten für die Anordnung der graphischen Objekte 7.1 bis 7.3 stellen dabei Möglichkeiten für das Layout eines Home-Screens dar.

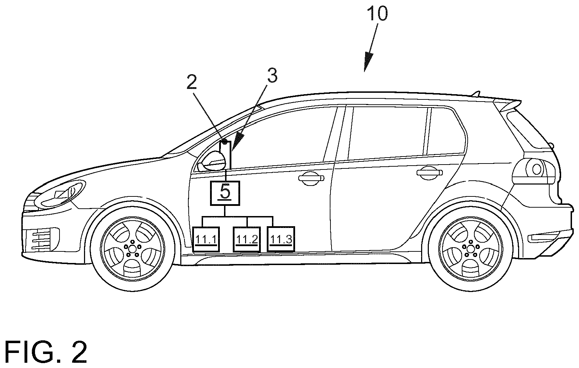

Weiterhin ist die Vorrichtung 1 mit Fahrzeugfunktionen 11.1 bis 11.3 des Fahrzeugs 12, in welchem sie angeordnet ist, gekoppelt. Ein Fahrzeug 12 mit einer erfindungsgemäßen Vorrichtung 1 ist dabei in Figur 2 gezeigt. Dabei stellt die Fahrzeugfunktion 11.1 eine Navigationsfunktion dar. Die Fahrzeugfunktion 11.2 ist eine Multimediafunktion des Fahrzeugs 12. Über die Fahrzeugfunktion 11.3 können Wetterdaten abgerufen werden.

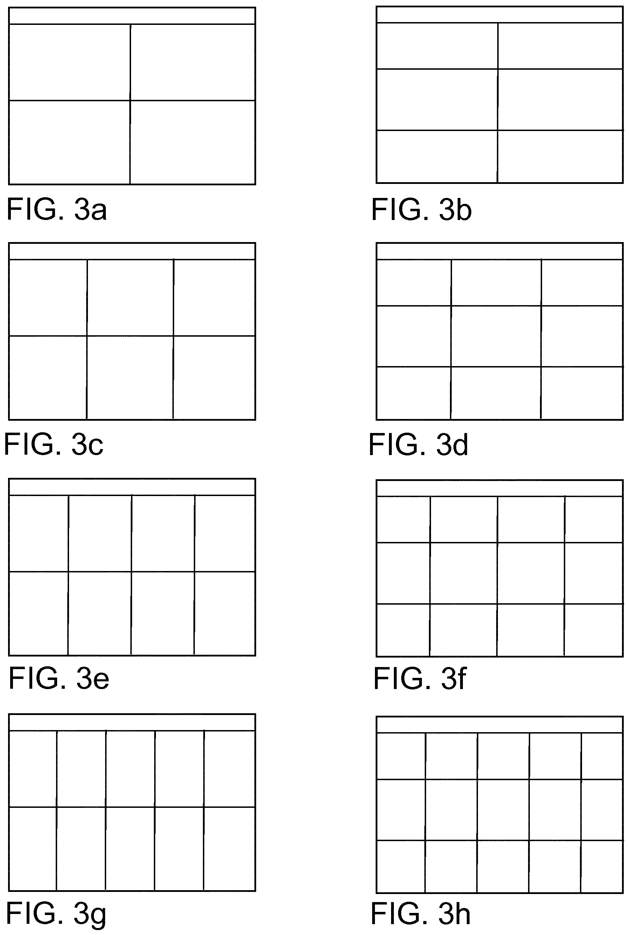

Mit Bezug zu Figuren 3a bis 3h werden Beispiele für Anordnungen graphischer Objekte 7.1 bis 7.3 und/oder weiterer graphischer Objekte, auch als Layout bezeichnet, auf der Anzeigefläche 3 erläutert.

Die Layouts basieren dabei auf Basisrastern, welche eine unterschiedliche Anzahl von Spalten und Zeilen umfassen können. Dabei zeigt das Basisraster der Figur 3a eine Aufteilung der Anzeigefläche 3 in zwei Spalten und zwei Zeilen (2x2-Basisraster). Figur 3b zeigt eine Aufteilung der Anzeigefläche 3 in zwei Spalten und drei Zeilen (2x3-Basisraster). Figur 3c zeigt eine Aufteilung der Anzeigefläche 3 in drei Spalten und zwei Zeilen (3x2-Basisraster). Figur 3d zeigt eine Aufteilung der Anzeigefläche 3 in drei Spalten und drei Zeilen (3x3-Basisraster). Figur 3e zeigt eine Aufteilung der Anzeigefläche 3 in vier Spalten und zwei Zeilen (4x2-Basisraster). Figur 3f zeigt eine Aufteilung der Anzeigefläche 3 in vier Spalten und drei Zeilen (4x3-Basisraster). Figur 3g zeigt eine Aufteilung der Anzeigefläche 3 in fünf Spalten und zwei Zeilen (5x2-Basisraster). Figur 3h zeigt eine Aufteilung der Anzeigefläche 3 in fünf Spalten und drei Zeilen (5x3-Basisraster).

Die Basisraster stellen die zu Grunde liegende Unterteilung der Anzeigefläche 3 in Spalten und Zeilen dar. Durch diese Unterteilung entstehen Fenster, in welchen die graphischen Objekte 7.1 bis 7.3 angeordnet werden können. Dabei sind nur Objekt-Größen vorgesehen, die zu den Basisrastern passen. Dadurch wird die minimale Größe eines Objekts beschränkt. Bei zunehmender Anzahl von Spalten und/oder Zeilen erhöht sich die Anzahl an möglichen Objektgrößen. Weiterhin erhöht sich auch die Anzahl möglicher Anordnungen der Objekte auf der Anzeigefläche 3.

Die Basisraster 2x2 - 5x3 sind dabei in der Speichereinheit 13 der Vorrichtung 1 abgelegt. Ein graphisches Objekt 7.1 bis 7.3 kann sich auch über mehrere Spalten und Zeilen eines Basisrasters erstrecken.

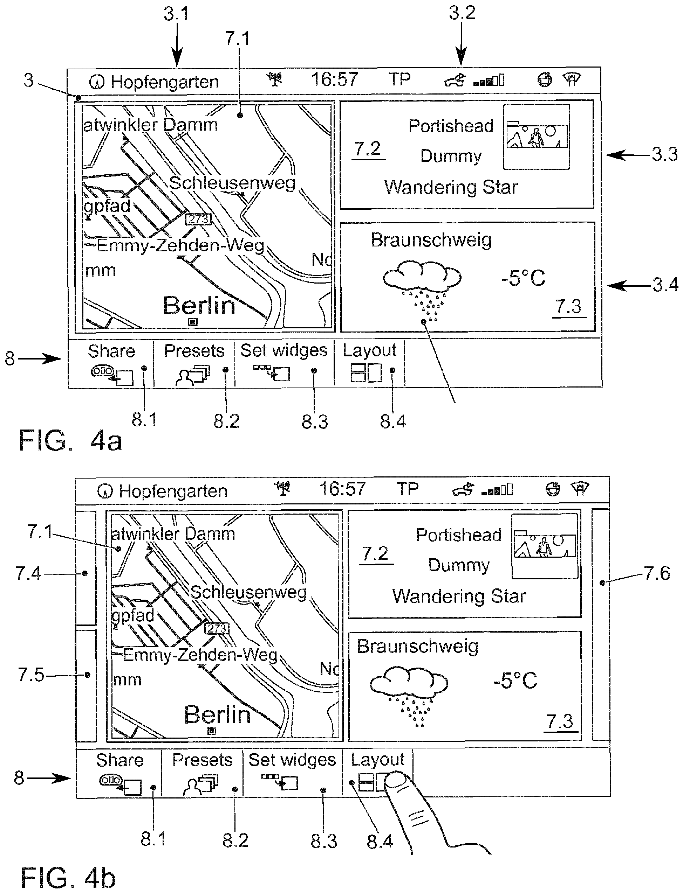

Mit Bezug zu den Figuren 4a und 4b wird eine Anzeige, welche einen ersten Home-Screen darstellt, angezeigt. Dabei befindet sich die Anzeigefläche in Figur 3a im Anzeigemodus und in Figur 3b im Bedienmodus.

Auf dem Home-Screen werden in einem Anzeigemodus drei Widget-Objekte 7.1 bis 7.3 angezeigt. Dabei ist das Widget-Objekt 7.1 der Navigationsfunktion des Fahrzeugs 12 zugeordnet. Das Widget-Objekt 7.2 ist der Multimediafunktion zugeordnet und das Widget-Objekt 7.3 ist einer Wetterfunktion zugeordnet. Weiterhin ist für die Anordnung der Widget-Objekte 7.1 bis 7.3 ein 2x2-Basisraster ausgewählt. Die Anzeigefläche wird als in zwei Spalten 3.1 und 3.2 und zwei Zeilen 3.3 und 3.4 aufgeteilt. Das Widget-Objekt 7.1 erstreckt sich über eine Spalte 3.1 und über die zwei Zeilen 3.2 und 3.4. Das Widget-Objekt 7.2 erstreckt sich über die Spalte 3.2 und die Zeile 3.3, während sich das Widget-Objekt 7.3 über die Spalte 3.2 und die Zeile 3.4 erstreckt.

In einer unteren Leiste 8 sind mehrere Schaltflächen 8.1 bis 8.4 angeordnet. Über diese Schaltflächen 8.1 bis 8.4 hat der Nutzer die Möglichkeit, den Home-Screen zu konfigurieren.

Dabei kann der Nutzer über die Schaltfläche 8.4 das Layout des Home-Screen konfigurieren. Dies bedeutet dabei, dass der Nutzer die Anordnung, Anzahl und Größe der Widget-Objekte 7.1 bis 7.3, die auf dem Home-Screen angezeigt werden sollen, konfigurieren kann.

Wird eine Bedienabsicht seitens des Nutzers erkannt, wechselt die Anzeigevorrichtung 2 in einen Bedienmodus. Die Anzeige im Bedienmodus ist in Figur 4b gezeigt und unterscheidet sich dadurch von der Anzeige im Anzeigemodus, dass weitere Widget-Objekte 7.4 - 7.6 zumindest teilweise angrenzend an die Widget-Objekte 7.1 bis 7.3 angezeigt werden. Dabei grenzen die weiteren Widget-Objekte 7.4 und 7.5 an das Widget-Objekt 7.1 an. Das weitere Widget-Objekt 7.6 grenzt an die Widget-Objekte 7.2 und 7.3 an. Dabei können die weiteren Widget-Objekte 7.4 bis 7.6 Widget-Objekte anderer vom Nutzer konfigurierter Home-Screens sein.

Betätigt der Nutzer die Schaltfläche 8.4, wird dies als erste Bedienaktion erfasst. Dem Nutzer werden verschiedene mögliche Layouts für den Home-Screen angezeigt, die auf den Basisrastern 2x2 bis 5x3 beruhen.

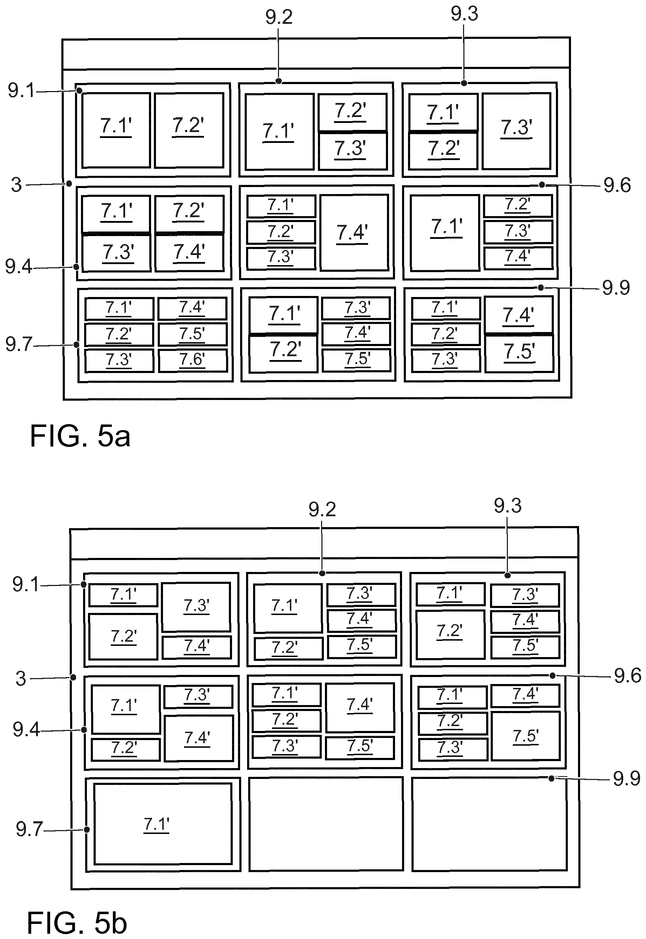

In den Figuren 5a bis 5d sind Beispiele für Anzeigen gezeigt, die dem Nutzer angezeigt werden können, nachdem er die Schaltfläche 8.4 betätigt hat.

Die Anzeige auf der Anzeigefläche 3 weist dann mehrere Fenster 9.1 bis 9.9 auf, welche die Anzeigefläche 3 repräsentieren. Beispielsweise werden neun Felder 9.1 bis 9.9 auf der Anzeigefläche 3 angezeigt. Dabei zeigt jedes Feld 9.1 bis 9.9 eine andere Möglichkeit der Anordnung von Widget-Objekten 7.1 bis 7.3. Dabei werden Platzhalter 7.1' bis 7.6' in den Fenstern 9.1 bis 9.9 dargestellt, welche die Widget-Objekte 7.1 bis 7.6 repräsentieren. Es sei darauf hingewiesen, dass die Platzhalter für jedes beliebige Widget-Objekt 7.1 bis 7.6, welches auf der Anzeigefläche 3 erzeugt werden kann, stehen können. Die Vorrichtung 1 ist nicht darauf beschränkt, lediglich sechs graphische Objekte oder Widget-Objekte 7.1 bis 7.6 auf der Anzeigefläche 3 anzuzeigen. Die Anzahl der auf einem Home-Screen angezeigten graphischen Objekte oder Widget-Objekte 7.1 bis 7.3 ist insbesondere abhängig von der Größe der Anzeigefläche 3 selbst. Denn die graphischen Objekte oder Widget-Objekte 7.1 bis 7.3 sollen vom Nutzer ohne Probleme auf der Anzeigefläche 3 zu erkennen sein.

Die Felder 9.1 bis 9.9 stellen dann eine Vorschau darauf dar, wie der Home-Screen aussieht, wenn das jeweilige Feld 9.1 bis 9.9 ausgewählt werden würde.

Beispielsweise kann der Nutzer über das erste Feld 9.1 auf der Anzeigefläche 3 ein Layout wählen, bei dem zwei gleichgroße Widget-Objekte 7.1 und 7.2 die Anzeigefläche 3 ausfüllen. Dabei wurde für das Layout des Feldes 9.1 ein 2x1-Basisraster ausgewählt. Alternativ kann auch ein 2x2 Basisraster ausgewählt worden sein, wobei sich die Widget-Objekte 7.1 und 7.2 dann jeweils über eine Spalte, aber über zwei Zeilen erstrecken.

Mit welchen Funktionen die Widget-Objekte 7.1 bis 7.6 besetzt werden sollen, kann dann nach dem Auswählen des gewünschten Layouts über die Schaltfläche 8.3 in der Leiste 8 auf der Anzeige der Anzeigefläche 3 ausgewählt werden.

Die Platzhalter 7.1' bis 7.6' können beispielsweise leer angezeigt werden. Dadurch erhält der Nutzer eine grobe Einschätzung für das Layout des Home-Screens. Wählt er dann ein Layout aus einem der Fenster 9.1 bis 9.9 aus, so kann er nach dem Auswählen über die Schaltfläche 8.3 in der Leiste 8 die Funktion auswählen, welche den Widget-Objekten 7.1 und 7.2 zugeordnet werden sollen.

Alternativ können aber die Anzeigeinhalte, die tatsächlich von den Widget-Objekten 7.1 bis 7.6 angezeigt werden, den Platzhaltern 7.1' bis 7.6' entsprechend zugeordnet werden. Der Nutzer muss dann den Widget-Objekten 7.1 bis 7.6 keine Funktionen mehr zuordnen, sondern kann ganz einfach den als Vorschau angezeigten Home-Screen zur vollen Anzeige bringen.

Das Layout des ersten Home-Screens aus Figur 4a entspricht dem Layout aus dem Fenster 9.2 der Figur 5a.

Weisen die Platzhalter 7.1' bis 7.3' andere Größen als die Widget-Objekte 7.1 bis 7.3 auf, können die in den ursprünglichen Widget-Objekten 7.1 bis 7.3 angezeigten Informationen den Platzhaltern 7.1' bis 7.3' zugewiesen werden und dadurch andere Größen erhalten. Dies ist beispielsweise beim Layout des Feldes 9.3 aus Figur 5a der Fall. Die Information des Navigationssystems kann dann in einem kleineren Widget-Objekt 7.1 angezeigt werden, während die Wetterinformation in einem vergrößerten Widget-Objekt 7.3 angezeigt wird. Die Größe des Widget-Objekts 7.2 verändert sich nicht. Es wird lediglich an einer anderen Position auf der Anzeigefläche 3 angezeigt.

Dabei kann die in den Widget-Objekten 7.1 bis 7.3 angezeigte Information für jede Fahrzeugfunktion an die neuen Größen der Widget-Objekte 7.1 bis 7.3 angepasst werden.

Dies bedeutet, dass der Anzeigeinhalt verringert wird, wenn einem Widget-Objekt 7.1 bis 7.6 durch die Layout-Wahl eine kleinere Größe als bisher zugeordnet wird. Ebenso kann der Anzeigeinhalt vergrößert werden, wenn einem Widget-Objekt 7.1 bis 7.6 durch die Layout-Wahl eine größere Größe als bisher zugeordnet wird. Dadurch wird gewährleistet, dass der Home-Screen für den Nutzer übersichtlich gestaltet bleibt, auch wenn ein neues Layout ausgewählt wird.

Die Layouts der Home-Screens können auch derart ausgestaltet sein, dass die Anzeigefläche 3 in mehr oder weniger als zwei Spalten und/oder zwei Zeilen aufgeteilt werden. Bei nur einer Spalte und nur einer Zeile wird auch nur ein Widget-Objekt 7.1 angezeigt, welches sich dann über die gesamte Anzeigefläche 3 erstreckt. Ein Beispiel dafür ist im Fenster 9.7 in Figur 5b gezeigt.

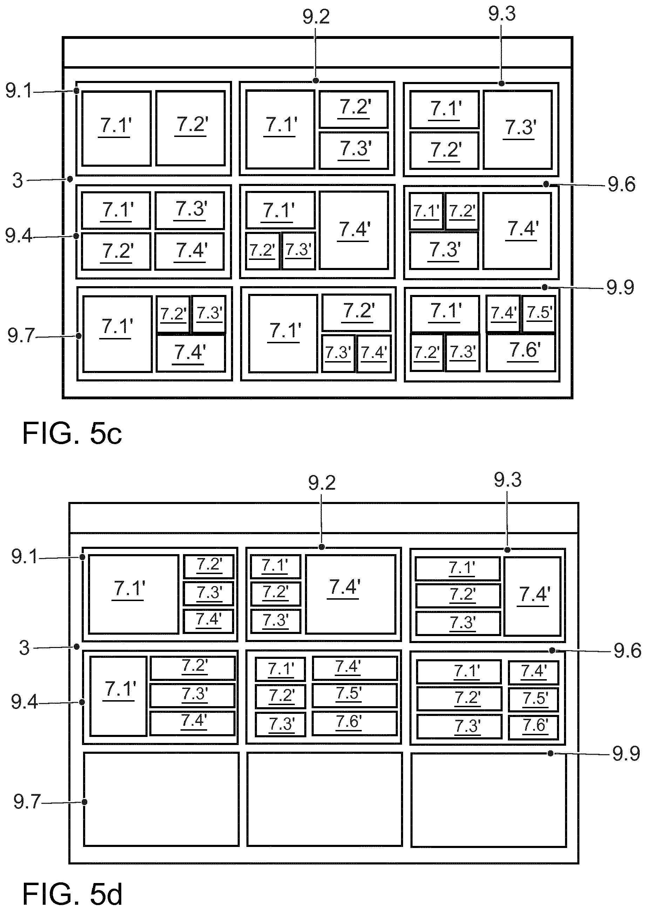

Wählt der Nutzer ein Layout, welches mehr Widget-Objekte 7.1 bis 7.4 aufweist, als momentan auf dem ersten Home-Screen angezeigt werden, beispielsweise eines der Layouts aus den Fenstern 9.4 bis 9.9 aus Figur 5c, kann der Platzhalter 7.4' in der Vorschau und das Widget-Objekt 7.4 auf der tatsächlichen Anzeige leer angezeigt werden. Durch die Wahl eines Layouts mit mehr als drei Widget-Objekten 7.1 bis 7.3, wie es momentan auf dem ersten Home-Screen angezeigt wird, kann der Nutzer dem Home-Screen auf einfache Weise ein Widget-Objekt 7.4 hinzufügen.

Umgekehrt kann der Nutzer durch die Wahl eines Layouts mit weniger als den momentan angezeigten Widget-Objekten 7.1 bis 7.3 eines der Widget-Objekte 7.1 bis 7.3 vom Home-Screen löschen.

Figur 5c zeigt unter anderem Beispiele für Layouts, für die das 4x2-Basisraster zur Verwendung kommt. Diese sind in den Feldern 9.5 bis 9.9 angezeigt. Dabei erstreckt sich der Platzhalter 7.1' und dann entsprechend das Widget-Objekt 7.1 über zwei Spalten und eine Zeile. Die Platzhalter 7.2' und 7.3' und somit entsprechend die Widget-Objekte 7.2 und 7.3 über jeweils eine Spalte und eine Zeile. Der Platzhalter 7.4' und somit entsprechend das Widget-Objekt 7.4 erstreckt sich über zwei Spalten und zwei Zeilen.

In Figur 5d sind asymmetrische Home-Screens gezeigt. Diese basieren auf einem 3x3-Basisraster, wobei sich beispielsweise im Fenster 9.1 der Platzhalter 7.1' über zwei Spalten und drei Zeilen und die Platzhalter 7.2' bis 7.4' über jeweils eine Spalte und eine Zeile erstrecken.

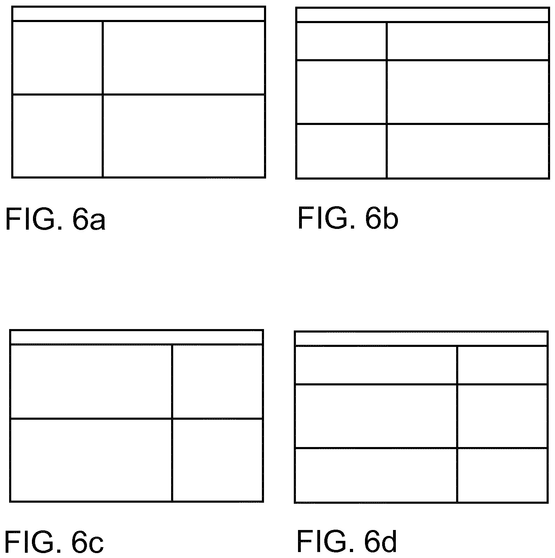

Alternativ können auch bereits die Basisraster asymmetrisch ausgebildet sein. Beispiele zu asymmetrischen Basisrastern sind dabei in Figuren 6a bis 6d gezeigt.

Wählt der Nutzer eines der Layouts aus, beispielsweise durch eine Berührung der berührungsempfindlichen Oberfläche 4.1, wird das als zweite Bedienaktion erfasst. Der Home-Screen wird im neuen Layout auf der Anzeigefläche 3 angezeigt.

Mit der Vorrichtung 1 und dem Verfahren kann das Layout des Home-Screens vom Fahrer auch während der Fahrt gewechselt werden, ohne dass der Fahrer seine Aufmerksamkeit vom Straßengeschehen abwenden muss.

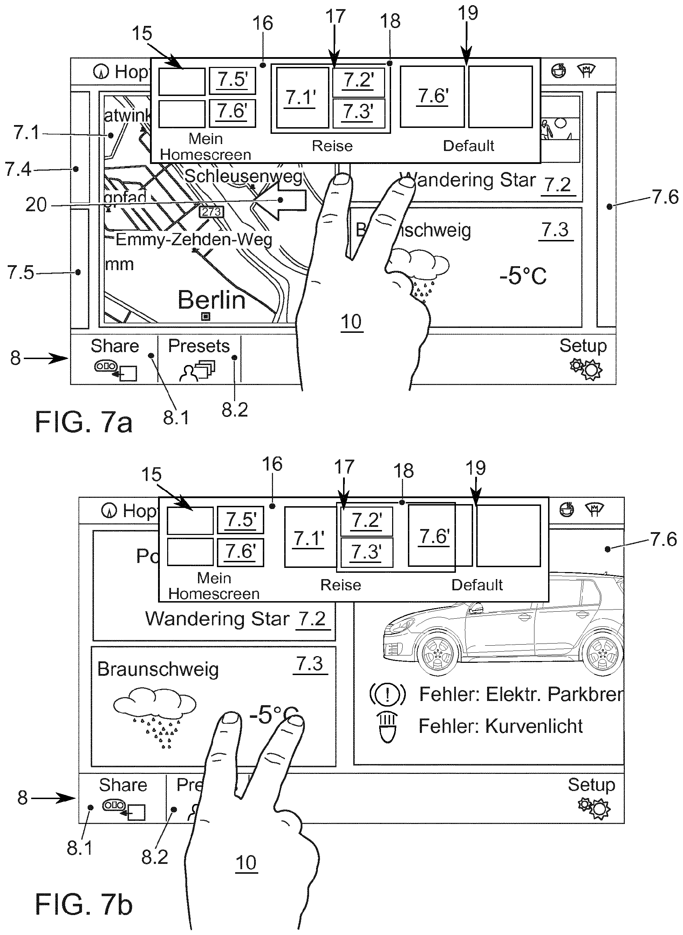

Mit Bezug zu den Figuren 7a und 7b wird ein weiteres Ausführungsbeispiel des erfindungsgemäßen Verfahrens erläutert. Dabei ist die Ausgangssituation der Home-Screen aus Figur 4a.

Weiterhin hat der Nutzer im Vorgang bereits mehrere Home-Screens 15, 17 und 19 für unterschiedliche Themengebiete angelegt.

Der Home-Screen 15 umfasst dabei mehrere Themengebiete, die der Nutzer selbst ausgewählt hat. Beispielsweise beinhaltet der Home-Screen 15 Widget-Objekte 7.4 und 7.5, die der Nutzer besonders häufig verwendet.

Der Home-Screen 17 ist dem Themengebiet Reise zugeordnet und stellt den in Figur 4a gezeigten Home-Screen 17 dar. Dabei wird im Widget-Objekt 7.1 die befahrene Route angezeigt. Im Widget-Objekt 7.1 wird ein Musiktitel angezeigt, der momentan abgespielt wird. Weiterhin kann das Widget-Objekt 7.2 eine Liste von Musiktiteln enthalten, die der Nutzer extra für die Reise zusammengestellt hat. Das Widget-Objekt 7.3 zeigt Wetterinformationen für den Zielort an.

Der Home-Screen 19 ist ein standardisierter Home-Screen, der ab Werk vom Fahrzeughersteller zur Verfügung gestellt wird. Dieser beinhaltet beispielsweise ein Widget-Objekt 7.6, welches Informationen zum Fahrzeugzustand beinhaltet.

Der Nutzer bringt zunächst seine Hand 10 in den Erfassungsraum 6 ein. Es wird also eine Bedienabsicht seitens des Nutzers erkannt.

Die Steuereinheit 5 steuert die Anzeigevorrichtung 2 so an, dass die Anzeigefläche 3 von dem Anzeigemodus aus Figur 4a in einen Bedienmodus, gezeigt in Figur 7a wechselt. Der Bedienmodus zeichnet sich dadurch aus, dass am oberen Rand der Anzeigefläche 3 ein Fenster 16 angezeigt wird. Das Fenster 16 beinhaltet dabei eine schematische Übersicht aller vorhandenen Home-Screens 15, 17 und 19. Dabei werden ebenso die Platzhalter 7.1' bis 7.6' angezeigt. Dabei können die Platzhalter 7.1' bis 7.6' auch mit Anzeigeinhalten der Widget-Objekte 7.1 bis 7.6 gefüllt sein. Dadurch erhält der Nutzer aus dem Fenster 16 eine Vorschau auf die Inhalte der Home-Screens 15, 17 und 19.

Die schematische Ansicht des momentan auf der Anzeigefläche 3 angezeigten Home-Screens 17 wird dabei durch eine Markierung 18 hervorgehoben dargestellt.

Der Nutzer berührt zunächst die berührungsempfindliche Oberfläche 4.1. Dies wird als erste Bedienaktion erkannt. Alternativ kann bereits die Bedienabsicht, als das Eindringen des Betätigungselements 10 in den Erfassungsraum 6 als erste Bedienaktion erkannt werden.

Der Nutzer bewegt das Betätigungselement 10 nach links. Er führt eine sogenannte Wischgeste aus. Dies wird als zweite Bedienaktion erfasst. Es wird die Richtung 20 der Wischgeste als nach links erkannt.

Es wird ein Bildlauf auf der Anzeigefläche 3 erzeugt. Dabei wird das Widget-Objekt 7.6, welches zu dem an den Home-Screen 17 anschließenden Home-Screen 19 gehört, auf der rechten Seite in die Anzeigefläche 3 hineingeschoben, während das Widget-Objekt 7.1 auf der linken Seite aus der Anzeigefläche 3 hinausgeschoben wird. Die Widget-Objekte 7.2 und 7.3 werden ebenso nach links auf der Anzeigefläche 3 verschoben.

Gleichzeitig zu dem Bildlauf, wird auch die Markierung 18 in dem Fenster 16 nach rechts verschoben. Dadurch wird dem Nutzer immer angezeigt, wo er sich innerhalb der vorhandenen Home-Screens 15, 17 und 19 befindet. Weiterhin wird im ständig angezeigt, dass die beiden Widget-Objekte 7.2 und 7.3 zu dem Home-Screen 17 und das Widget-Objekt 7.6 zu dem Home-Screen 19 gehören.

Nimmt der Nutzer das Betätigungselement 10 von der berührungsempfindlichen Oberfläche 4.1 springt die Anzeige auf der Anzeigefläche 3 zu dem Home-Screen 15, 17 oder 19, mit dem die Markierung 18 im oberen Fenster 16 die größte Überlappung aufweist. Im Beispiel der Figur 7b würde die Anzeige auf der Anzeigefläche 3 also zurück auf die Anzeige des Home-Screens 17 springen.

Verlässt das Betätigungselement 10 den Erfassungsraum 6, wechselt die Anzeigefläche 3 wieder in den Anzeigemodus.

Alternativ kann der Nutzer die Bedienaktion auch auf dem Fenster 16 ausführen. Um das gleiche Anzeigeergebnis wie in Figur 7b zu erzielen, verschiebt er die Markierung 18 nach rechts. Diese Bedienaktion wird wiederum als Wischgeste erfasst. Weiterhin wird erfasst, dass die Wischgeste nicht der gesamten Anzeigefläche 3 gilt, sondern wird dem Fenster 16 zugeordnet.

Mit der Wischgeste in dem Fenster 16 wird die Markierung 18 nach rechts in Richtung des Home-Screens 19 verschoben.

Gleichzeitig wird dann die Anzeige auf der Anzeigefläche 3 nach links verschoben.

Es kann also durch zwei entgegengesetzt gerichtete Wischgesten die gleiche Anzeige auf der Anzeigefläche 3 erzeugt werden. Dabei wird von der Vorrichtung 1 unterschieden, wo die Bedienaktion auf der berührungsempfindlichen Oberfläche 4.1 ausgeführt wird.

Die Wischgeste kann eine Berührung der berührungsempfindlichen Oberfläche 4.1 an einem oder zwei Berührungspunkten sein. Die Wischgeste kann auch lediglich im Erfassungsraum 6 ausgeführt werden, wobei dann durch eine Bestimmung der Position der Hand 10 des Nutzers in dem Erfassungsraum 6 ermittelt wird, ob die Wischgeste der Anzeigefläche 3 oder dem Fenster 16 am oberen Rand der Anzeigefläche 3 gilt.

Weiterhin können in der Speichereinheit 13 mehr als drei Home-Screens 15,17 und 19 abgespeichert sein. Dabei kann dann ebenso in dem Fenster 16 ein Bildlauf erzeugt werden, mittels welchem schematische Ansichten verschiedener Home-Screens zur Anzeige gebracht werden können.

### Bezugszeichenliste

- 1: Vorrichtung
- 2: Anzeigevorrichtung
- 3: Anzeigefläche
- 4.1: berührungsempfindliche Oberfläche
- 4.2: Annäherungserfassungseinheit
- 5: Steuereinheit
- 6: Erfassungsraum
- 7.1 - 7.6: graphische Objekte; Widget-Objekte
- 8: Leiste
- 8.1 - 8.4: Schaltflächen
- 9.1 - 9.9: Fenster
- 10: Betätigungselement; Hand
- 11.1 - 11.3: Fahrzeugfunktionen
- 12: Fahrzeug
- 13: Speichereinheit
- 14: Konfiguriereinheit
- 15, 17, 19: schematische Darstellung der Home-Screens
- 16: Fenster
- 18: Markierung
- 20: Richtung einer Wischgeste

## Patentansprüche

1. Vorrichtung (1) zum Bereitstellen einer graphischen Benutzerschnittstelle für ein Fahrzeug (12), mit
einer Anzeigevorrichtung (2) mit einer Anzeigefläche (3), auf welcher graphische Objekte (7.1 - 7.3) in einer vorbestimmten Anordnung anzeigbar sind,
einer Speichereinheit (13), in welcher eine Anzahl von Möglichkeiten für die Anordnung der graphischen Objekte (7.1 - 7.3) auf der Anzeigefläche (3) abgespeichert ist, wobei in der Speichereinheit (13) zumindest eine erste und eine zweite Hauptanzeige (15, 19) mit weiteren graphischen Objekten (7.4 - 7.6) speicherbar ist,
einer Erfassungseinheit (4.1, 4.2), mittels welcher eine erste Bedienaktion eines Nutzers erfassbar ist, mittels welcher die Anzahl von Möglichkeiten für die Anordnung der graphischen Objekte (7.1 - 7.3) zur Anzeige bringbar ist, und mit welcher eine zweite Bedienaktion erfassbar ist, mittels welcher eine der Möglichkeiten für die Anordnung auswählbar ist, wobei die Erfassungseinheit (4.1, 4.2) eine Annäherungserfassungseinheit (4.2) umfasst, mittels welcher eine Bedienabsicht erfassbar ist, und
einer Steuereinheit (5), mittels welcher die Anzeigefläche (3) derart ansteuerbar ist, dass die graphischen Objekte (7.1 - 7.3) in der ausgewählten Anordnung anzeigbar sind, wenn die Erfassungseinheit (4.1, 4.2) die zweite Bedienaktion erfasst hat, wobei,
wenn die Annäherungserfassungseinheit (4.2) eine Bedienabsicht erfasst hat, die Anzeigefläche (3) mittels der Steuereinheit (5) derart ansteuerbar ist, dass sie von einem Anzeigemodus in einen Bedienmodus wechselt, wobei in dem Bedienmodus die weiteren graphischen Objekte (7.4 - 7.6) zumindest teilweise anzeigbar sind, wobei
in Abhängigkeit von der Erfassung der ersten Bedienaktion ein Fenster (16) auf der Anzeigefläche (3) anzeigbar ist, in welchem die zumindest zwei Hauptanzeigen (15, 19) schematisch darstellbar sind, wobei die schematische Darstellung der ersten Hauptanzeige (17) durch eine Markierung (18) hervorgehoben darstellbar ist,
**dadurch gekennzeichnet, dass**
die zweite Bedienaktion eine Wischgeste umfasst, wobei die Richtung (20) der Wischgeste erfassbar ist, und
mit der Wischgeste in Abhängigkeit von der Richtung (20) der Wischgeste ein Bildlauf auf der Anzeigefläche (3) erzeugbar ist, mittels welchem die weiteren graphischen Objekte (7.4 - 7.6) der zweiten Hauptanzeige (15, 19) zur Anzeige bringbar sind, wobei gleichzeitig die Markierung (18) in dem Fenster (16) entsprechend der Positionen der graphischen Objekte (7.1 - 7.3) und der weiteren graphischen Objekte (7.4 - 7.6) auf der Anzeigefläche (3) auf den schematischen Darstellungen der Hauptanzeigen (15, 17, 19) verschiebbar ist.

2. Vorrichtung (1) nach Anspruch 1,
**dadurch gekennzeichnet, dass**
die Vorrichtung (1) eine Konfiguriereinheit (14) aufweist, mittels welcher die Möglichkeiten für die Anordnung der graphischen Objekte (7.1 - 7.3) konfigurierbar sind.

3. Vorrichtung (1) nach Anspruch 1 oder 2,
**dadurch gekennzeichnet, dass**
die Möglichkeiten für die Anordnung der graphischen Objekte (7.1 - 7.3) über Felder (9.1 - 9.9), welche die Anzeigefläche (3) repräsentieren und welche Platzhalter (7.1' - 7.6') aufweisen, welche die graphischen Objekte (7.1 - 7.3) repräsentieren, anzeigbar sind.

4. Vorrichtung (1) nach Anspruch 3,
**dadurch gekennzeichnet, dass**
den Platzhaltern (7.1' - 7.6') Anzeigeinhalte der graphischen Objekte (7.1 - 7.3) zuordenbar sind, so dass in jedem Feld (9.1 - 9.9) eine Vorschau darauf erzeugbar ist, welche Anzeige auf der Anzeigefläche (3) anzeigbar ist, wenn eines der Felder (9.1 - 9.9) ausgewählt werden würde.

5. Vorrichtung (1) nach Anspruch 3 oder 4,
**dadurch gekennzeichnet, dass**
die graphischen Objekte (7.1 - 7.3) in Ausgangsgrößen mit einem Anzeigeinhalt anzeigbar sind und die Platzhalter (7.1' - 7.6') in verschiedenen Größen anzeigbar sind, wobei ein graphisches Objekt (7.1 - 7.3) einem Platzhalter (7.1' - 7.6') mit geringerer oder größerer Größe zuordenbar ist, wobei der Anzeigeinhalt des graphischen Objekts (7.1 - 7.3) verkleinerbar oder vergrößerbar ist.

6. Vorrichtung (1) nach einem der vorhergehenden Ansprüche,
**dadurch gekennzeichnet, dass**
die Vorrichtung (1) Fahrzeugfunktionen (11.1 - 11.3) des Fahrzeugs (12) umfasst und die graphischen Objekte (7.1 - 7.3) Widget-Objekte umfassen, welche den Fahrzeugfunktionen (11.1 - 11.3) des Fahrzeugs (12) zugeordnet sind und welche Informationen zu den Einstellungen der Fahrzeugfunktionen (11.1 - 11.3) umfassen.

7. Vorrichtung (1) nach einem der vorhergehenden Ansprüche,
**dadurch gekennzeichnet, dass**
die vorbestimmte Anordnung der graphischen Objekte (7.1 - 7.3) eine erste Hauptanzeige (17) der Anzeigevorrichtung (2) bereitstellt, wobei die Hauptanzeige (17) in Abhängigkeit von einem Betriebsmodus der Anzeigevorrichtung (2) anzeigbar ist.

8. Verfahren zum Bereitstellen einer graphischen Benutzerschnittstelle für ein Fahrzeug (12), bei dem
graphische Objekte (7.1 - 7.3) in einer vorbestimmten Anordnung auf einer Anzeigefläche (3) angezeigt werden,
eine erste Bedienaktion erfasst wird,
wenn die erste Bedienaktion erfasst wurde, eine Anzahl von Möglichkeiten für die Anordnung der graphischen Objekte (7.1 - 7.3) auf der Anzeigefläche (3) angezeigt wird,
eine zweite Bedienaktion erfasst wird, mit der eine der Möglichkeiten für die Anordnung ausgewählt wird, und,
wenn die zweite Bedienaktion erfasst wurde, die graphischen Objekte (7.1 - 7.3) in der ausgewählten Anordnung angezeigt werden, wobei,
die vorbestimmte Anordnung der graphischen Objekte (7.1 - 7.3) einer ersten Hauptanzeige (17) der Anzeigevorrichtung (2) zugeordnet wird, die auf der Anzeigefläche (3) angezeigt wird, wobei auf der Anzeigefläche (3) zumindest eine zweite Hauptanzeige (15, 19) mit weiteren graphischen Objekten (7.4 - 7.6) anzeigbar ist,
wenn die erste Bedienaktion erfasst wurde, ein Fenster (16) angezeigt wird, in welchem die zwei Hauptanzeigen (15, 17, 19) schematisch dargestellt werden, wobei die schematische Darstellung der ersten Hauptanzeige (17) durch eine Markierung (18) hervorgehoben dargestellt wird,
**dadurch gekennzeichnet, dass,**
die zweite Bedienaktion eine Wischgeste umfasst, wobei die Richtung (20) der Wischgeste erfasst wird, und
mit der Wischgeste in Abhängigkeit von der Richtung (20) der Wischgeste ein Bildlauf auf der Anzeigefläche (3) erzeugt wird, mittels welchem die weiteren graphischen Objekte (7.4 - 7.6) der zweiten Hauptanzeige (15, 19) zur Anzeige gebracht werden, wobei gleichzeitig die Markierung (18) in dem Fenster (16) entsprechend der Position der graphischen Objekte (7.1 - 7.3) und der weiteren graphischen Objekte (7.4 - 7.6) auf den schematischen Darstellungen der Hauptanzeigen (15, 17, 19) verschoben wird.

9. Fahrzeug (12) mit einer Vorrichtung (1) nach einem der Ansprüche 1 bis 7.

## Claims

1. A device (1) for providing a graphical user interface for a vehicle (12), with
a display device (2) with a display area (3), on which graphic objects (7.1 - 7.3) are displayable in a predetermined arrangement,
a storage unit (13), in which a number of possibilities for the arrangement of the graphic objects (7.1 - 7.3) is stored on the display area (3), wherein at least a first and a second main display (15, 19) with further graphic objects (7.4 - 7.6) are storable in the storage unit (13),
a detection unit (4.1, 4.2), by means of which a first operating action of a user is detectable, by means of which the number of possibilities for the arrangement of the graphic objects (7.1 - 7.3) is displayable, and with which a second operating action is detectable, by means of which one of the possibilities for the arrangement is selectable, wherein the detection unit (4.1, 4.2) comprises an approach detection unit (4.2) by means of which an operating intention is detectable, and
a control unit (5), by means of which the display area (3) is actuatable in such a manner that the graphic objects (7.1 - 7.3) are displayable in the selected arrangement, when the detection unit (4.1, 4.2) has detected the second operating action, wherein,
when the approach detection unit (4.2) has detected an operating intention, the display area (3) is actuatable by the control unit (5) in such a manner that the display area (3) changes from a display mode into an operating mode, wherein the further graphic objects (7.4 - 7.6) are at least partially displayable in the operating mode, wherein
depending on the detection of the first operating action, a window (16) is displayable on the display area (3), in which the at least two main displays (15, 19) are depictable schematically, wherein the schematic depiction of the first main display (17) is depictable in a highlighted manner by a marking (18),
**characterized in that**
the second operating action comprises a wiping gesture, wherein the direction (20) of the wiping gesture is detectable and
with the wiping gesture, depending on the direction (20) of the wiping gesture, scrolling is producible on the display area (3) by means of which the further graphic objects (7.4 - 7.6) of the second main display (15, 19) are displayable, wherein simultaneously the marking (18) is shiftable in the window (16) according to the positions of the graphic objects (7.1 - 7.3) and the further graphic objects (7.4 - 7.6) on the display area (3) on the schematic depictions of the main displays (15, 17, 19).

2. The device (1) according to claim 1,
**characterized in that**
the device (1) has a configuring unit (14) by means of which the possibilities for the arrangement of the graphic objects (7.1 - 7.3) are configurable.

3. The device (1) according to claim 1 or 2,
**characterized in that**
the possibilities for the arrangement of the graphic objects (7.1 - 7.3) are displayable via fields (9.1 - 9.9), which represent the display area (3) and have placeholders (7.1' - 7.6') that represent the graphic objects (7.1 - 7.3).

4. The device (1) according to claim 3,
**characterized in that**
display content of the graphic objects (7.1 - 7.3) is assignable to the placeholders (7.1' - 7.6') so that in each field (9.1 - 9.9) a preview is producible thereupon, which display is displayable on the display area (3) if one of the fields (9.1 - 9.9) were selected.

5. The device (1) according to claim 3 or 4,
**characterized in that**
the graphic objects (7.1 - 7.3) are displayable in output values with a display content and the placeholders (7.1' - 7.6') are displayable in different values, wherein a graphic object (7.1 - 7.3) is assignable to a placeholder (7.1'- 7.6') with a lesser or greater value, wherein the display content of the graphic object (7.1 - 7.3) is reducible or enlargeable.

6. The device (1) according to one of the preceding claims,
**characterized in that**
the device (1) comprises vehicle functions (11.1 - 11.3) of the vehicle (12) and the graphic objects (7.1 - 7.3) comprise widget objects that are assigned to the vehicle functions (11.1 - 11.3) of the vehicle (12) and comprise information on the settings of the vehicle functions (11.1 - 11.3).

7. The device (1) according to one of the preceding claims,
**characterized in that**
the predetermined arrangement of the graphic objects (7.1 - 7.3) provides a first main display (17) of the display device (2), wherein the main display (17) is displayable depending on an operating mode of the display device (2).

8. Method for providing a graphical user interface for a vehicle (12), in which
graphic objects (7.1 - 7.3) are displayed on a display area (3) in a predetermined arrangement,
a first operating action is detected,
when the first operating action was detected, a number of possibilities for the arrangement of the graphic objects (7.1 - 7.3) is displayed on the display area (3),
a second operating action is detected, with which one of the possibilities for the arrangement is selected, and,
when the second operating action was detected, the graphic objects (7.1 - 7.3) are displayed in the selected arrangement, wherein,
the predetermined arrangement of the graphic objects (7.1 - 7.3) is assigned to a first main display (17) of the display device (2), which is displayed on the display area (3), wherein on the display area (3) at least a second main display (15, 19) with further graphic objects (7.4 - 7.6) is displayable,
when the first operating action was detected, a window (16) is displayed, in which the two main displays (15, 17, 19) are displayed schematically, wherein the schematic depiction of the first main display (17) is depicted in a highlighted manner by a marking (18),
**characterized in that**
the second operating action comprises a wiping gesture, wherein the direction (20) of the wiping gesture is detected, and
with the wiping gesture, depending on the direction (20) of the wiping gesture, scrolling is produced on the display area (3), by means of which the further graphic objects (7.4 - 7.6) of the second main display (15, 19) are displayed, wherein simultaneously the marking (18) in the window (16) is shifted according to the position of the graphic objects (7.1 - 7.3) and the further graphic objects (7.4 - 7.6) on the schematic depictions of the main displays (15, 17, 19) .

9. A vehicle (12) with a device (1) according to any one of claims 1 to 7.

## Revendications

1. Dispositif (1) destiné à fournir une interface utilisateur graphique pour un véhicule (12), avec
un dispositif d'affichage (2) avec une zone d'affichage (3), sur laquelle des objets graphiques (7.1 - 7.3) peuvent être affichés dans un agencement prédéterminé,
une unité de stockage (13), dans laquelle un nombre de possibilités pour l'agencement des objets graphiques (7.1 - 7.3) est stocké dans la zone d'affichage (3), au moins un premier et un deuxième écran principal (15, 19) avec d'autres objets graphiques (7.4 -7.6) pouvant être stocké dans l'unité de stockage (13),
une unité de détection (4.1, 4.2), au moyen de laquelle une première action d'activation d'un utilisateur peut être détectée, au moyen de laquelle le nombre de possibilités pour l'agencement des objets graphiques (7.1 - 7.3) peut être affiché, et avec laquelle une deuxième action d'activation peut être détectée, au moyen de laquelle une des possibilités pour l'agencement peut être sélectionnée, l'unité de détection (4.1, 4.2) comprenant une unité de détection d'approche (4.2), au moyen de laquelle une intention d'activation peut être détectée, et
une unité de commande (5), au moyen de laquelle la zone d'affichage (3) peut être commandée, de sorte que les objets graphiques (7.1 - 7.3) puissent être affichés dans l'agencement sélectionné, quand l'unité de détection (4.1, 4.2) a détecté la deuxième action d'activation,
quand l'unité de détection d'approche (4.2) a détecté une intention d'activation, la zone d'affichage (3) pouvant être commandée au moyen de l'unité de commande (5), de sorte qu'elle passe d'un mode d'affichage à un mode d'activation, les autres objets graphiques (7.4 - 7.6) pouvant être affichés dans le mode d'activation au moins partiellement,
en fonction de la détection de la première action d'activation, une fenêtre (16) pouvant être affichée dans la zone d'affichage (3), dans laquelle au moins les deux écrans principaux (15, 19) sont représentables schématiquement, la représentation schématique du premier écran principal (17) étant représentable en étant mise en valeur par une marque (18),
**caractérisé en ce que**
la deuxième action d'activation comprend un geste d'effleurement, la direction (20) du geste d'effleurement pouvant être détectée, et
avec le geste d'effleurement en fonction de la direction (20) du geste d'effleurement, un défilement peut être généré dans la zone d'affichage (3), au moyen duquel les autres objets graphiques (7.4 - 7.6) du deuxième écran principal (15, 19) peuvent être affichés, simultanément la marque (18) dans la fenêtre (16) selon les positions des objets graphiques (7.1 - 7.3) et des autres objets graphiques (7.4 - 7.6) pouvant être déplacée dans la zone d'affichage (3) sur les représentations schématiques des écrans principaux (15, 17, 19).

2. Dispositif (1) selon la revendication 1,
**caractérisé en ce que**
le dispositif (1) comporte une unité de configuration (14), au moyen de laquelle les possibilités pour l'agencement des objets graphiques (7.1 - 7.3) sont configurables.

3. Dispositif (1) selon la revendication 1 ou 2,
**caractérisé en ce que**
les possibilités pour l'agencement des objets graphiques (7.1 - 7.3) peuvent être affichées par des champs (9.1 - 9.9), qui représentent la zone d'affichage (3) et qui comportent des métacaractères (7.1'- 7.6'), qui représentent les objets graphiques (7.1 -7.3) .

4. Dispositif (1) selon la revendication 3,
**caractérisé en ce que**
des contenus d'affichage des objets graphiques (7.1 - 7.3) sont attribuables aux métacaractères (7.1'-7.6'), de sorte que dans chaque champ (9.1 - 9.9) une prévisualisation peut y être générée, ledit affichage peut être affiché dans la zone d'affichage (3), si un des champs (9.1 - 9.9) est sélectionné.

5. Dispositif (1) selon la revendication 3 ou 4,
**caractérisé en ce que**
les objets graphiques (7.1 - 7.3) peuvent être affichés en valeurs de sortie avec un contenu d'affichage et les métacaractères (7.1'- 7.6') en différentes valeurs, un objet graphique (7.1 - 7.3) étant attribuable à un métacaractère (7.1'- 7.6') avec une valeur inférieure ou supérieure, le contenu d'affichage de l'objet graphique (7.1 - 7.3) pouvant être diminué ou augmenté.

6. Dispositif (1) selon l'une des revendications précédentes,
**caractérisé en ce que**
le dispositif (1) comprend des fonctions de véhicule (11.1 - 11.3) du véhicule (12) et les objets graphiques (7.1 - 7.3) comprennent des widgets, qui sont attribués aux fonctions de véhicule (11.1 - 11.3) du véhicule (12) et qui comprennent des informations sur les paramétrages des fonctions de véhicule (11.1 - 11.3).

7. Dispositif (1) selon l'une des revendications précédentes,
**caractérisé en ce que**
l'agencement prédéterminé des objets graphiques (7.1 - 7.3) fournit un premier écran principal (17) du dispositif d'affichage (2), l'écran principal (17) pouvant être affiché en fonction d'un mode opérationnel du dispositif d'affichage (2).

8. Procédé destiné à fournir une interface utilisateur graphique pour un véhicule (12), dans lequel
des objets graphiques (7.1 - 7.3) sont affichés dans un agencement prédéterminé dans une zone d'affichage (3) ,
une première action d'activation est détectée,
quand la première action d'activation a été détectée, un nombre de possibilités pour l'agencement des objets graphiques (7.1 - 7.3) est affiché dans la zone d'affichage (3),
une deuxième action d'activation est détectée, avec laquelle une des possibilités pour l'agencement est sélectionnée, et,
quand la deuxième action d'activation a été détectée, les objets graphiques (7.1 - 7.3) sont affichés dans l'agencement sélectionné,
l'agencement prédéterminé des objets graphiques (7.1 - 7.3) étant attribué à un premier écran principal (17) du dispositif d'affichage (2), qui est affiché dans la zone d'affichage (3), au moins un deuxième écran principal (15, 19) pouvant être affiché avec d'autres objets graphiques (7.4 -7.6) dans la zone d'affichage (3),
quand la première action d'activation a été détectée, une fenêtre (16) est affichée, dans laquelle les deux écrans principaux (15, 17, 19) sont représentés schématiquement, la représentation schématique du premier écran principal (17) étant représentée en étant mise en valeur par une marque (18),
**caractérisé en ce que**
la deuxième action d'activation comprend un geste d'effleurement, la direction (20) du geste d'effleurement étant détectée, et
avec le geste d'effleurement en fonction de la direction (20) du geste d'effleurement, un défilement est généré dans la zone d'affichage (3), au moyen duquel les autres objets graphiques (7.4 - 7.6) du deuxième écran principal (15, 19) sont affichés, simultanément la marque (18) dans la fenêtre (16) selon la position des objets graphiques (7.1 - 7.3) et des autres objets graphiques (7.4 - 7.6) étant déplacée sur les représentations schématiques des écrans principaux (15, 17, 19).

9. Véhicule (12) avec un dispositif (1) selon l'une des revendications 1 à 7.
